# EUROPÄISCHE PATENTSCHRIFT

(11) **EP 2 986 402 B1**
(45) Veröffentlichungstag und Bekanntmachung des Hinweises auf die Patenterteilung: **01.03.2017**
(21) Anmeldenummer: 14714231.9
(22) Anmeldetag: 26.03.2014
(51) Int. Cl.: B21C 37/08, B21C 37/09, B21C 37/15, B21D 5/01

(54) **VERFAHREN ZUM HERSTELLEN EINES MEHRLAGIGEN GROSSROHRES**
METHOD FOR PRODUCING A MULTI-LAYER LARGE PIPE
PROCÉDÉ PERMETTANT DE FABRIQUER UN TUBE À GRAND DIAMÈTRE MULTICOUCHE

(30) Priorität: 16.04.2013 DE 102013103811
(43) Veröffentlichungstag der Anmeldung: 24.02.2016
(73) Patentinhaber: Eisenbau Krämer GmbH, 57223 Kreuztal (DE)
(72) Erfinder: REICHEL, Thilo, 57072 Siegen (DE); ARETOV, Ivan, 57223 Kreuztal (DE); VITALIY, Pavlyk, 57271 Hilchenbach (DE)
(74) Vertreter: Fleck, Hermann-Josef
(86) Internationale Anmeldenummer: PCT/EP2014/056059
(87) Internationale Veröffentlichungsnummer: WO 2014/170106

(56) Entgegenhaltungen:
- WO-A1-2006/066814
- WO-A1-2010/145680
- JP-A- S60 111 791

## Beschreibung

Die Erfindung bezieht sich auf ein Verfahren zum Herstellen eines mehrlagigen Großrohres mit einem Durchmesser von mindestens 200 mm und einer Gesamtwandstärke von mindestens 5 mm und mit einer außen liegenden Trägerschicht und mindestens einer innen liegenden Auflageschicht.

Ein Verfahren zum Herstellen eines mehrlagigen Großrohres unter stoffschlüssiger und kraftschlüssiger Verbindung einer äußeren Trägerschicht und einer inneren Auflageschicht ist in der EP 1 827 727 B1 gezeigt. Hierbei werden ein flaches Trägerblech und ein flaches Auflageblech aufeinander gelegt, wonach eine erste Verbindung zwischen den Werkstofflagen geschaffen wird. Die noch frei gegeneinander verschiebbaren Werkstofflagen werden sodann mit Hilfe einer Biegewalze unter ständigem Reibschluss zwischen den Werkstofflagen zum Rohr geformt. Nach einem bestimmten Verformungsfortschritt wird eine weitere Verbindung zwischen den Werkstofflagen dadurch geschaffen, dass diese an zumindest einer weiteren Position miteinander verbunden werden. Anschließend wird das Mehrlagenrohr mit Hilfe der Biegewalze und/oder einer Anbiegemaschine zu Ende geformt, wobei sich dann die Werkstofflagen nicht weiter gegeneinander verschieben können und die als Innenrohr fungierende Werkstofflage kraftschlüssig in die als Außenrohr fungierende Werkstofflage gepresst wird. Ein in der Herstellungsweise prinzipiell ähnliches Verfahren zeigt auch die EP 2 285 508 B1, wobei zumindest eine der Werkstofflagen aus mehr als einem aufgelegten Element besteht.

Weitere ähnliche Verfahren zur Herstellung eines Mehrlagenrohres zeigen die WO 2006/066814 A1 und die EP 1 857 194 A1. Bei all diesen Verfahren werden flache Blechplatten zum Bilden der Lagen aufeinander gelegt und in mehreren Schritten abwechselnd miteinander verbunden, der Verbund einem ersten Biegeprozess unterzogen, nach einem bestimmten Biegefortschritt wiederum an anderer Stelle geheftet und dann weitergebogen, um das Mehrlagenrohr herzustellen, womit ein entsprechender Herstellungsaufwand bedingt ist.

Auch die EP 1 857 194 B1 zeigt ein Verfahren zum Herstellen eines Mehrlagenrohres, bei dem zunächst ein flaches, plattenförmiges Trägerblech und ein flaches Auflageblech aufeinander gelegt werden. Das Trägerblech bzw. Grundblech ist entlang seiner beiden Längskanten oder in etwa parallel hierzu mit jeweils einer vorzugsweise aufgeschweißten Anschlagkante versehen, zwischen denen das Auflageblech lose eingelegt wird, um sodann den so gebildeten Mehrlagen-Werkstoff mit Hilfe einer Biegewalze zu einem Mehrlagenrohr zu formen. Die als Innenrohr fungierende Werkstofflage wird zwischen die Anschlagkanten geklemmt und in der Endphase der Rohrformung in der Biegewalze und/oder einer nachfolgend zum Einsatz kommenden Anbiegemaschine kraftschlüssig in die als Außenrohr fungierende Werkstofflage gepresst. Die Ausbildung der Anschlagkanten und deren Positionierung in Abstimmung auf die Ausdehnung des Auflageblechs stellen einen nicht unerheblichen Aufwand bei der Rohrfertigung dar, wobei mit diesen Schritten keine stoffschlüssige Verbindung erreicht wird.

Des Weiteren sind mehrlagige Großrohre bekannt, die als sogenannte Clad-Rohre metallurgisch mit einer Auflageschicht plattiert sind und so bereits beim Produktionsprozess der Platte in besonderen Fertigungsschritten ausgebildet werden. Bei dieser Vorgehensweise sind der Materialwahl für viele Einsatzfälle zu enge Grenzen gesetzt.

Der vorliegenden Erfindung liegt die Aufgabe zugrunde, ein Verfahren zum Herstellen eines mehrlagigen Großrohres der eingangs genannten Art bereitzustellen, das bei effizienter Fertigung vorteilhafte Abstimmungsmöglichkeiten für unterschiedliche Einsatzfälle ergibt.

Diese Aufgabe wird mit den Merkmalen des Anspruches 1 gelöst. Hiernach ist das Verfahren gekennzeichnet durch die Folge der Verfahrensschritte:
- Bereitstellen eines auf einen vorbestimmten Anfangsbiegeradius vorgebogenen Trägerblechs für die Trägerschicht und mindestens eines auf einen vorbestimmten Anfangsbiegeradius vorgebogenen Auflageblechs für die Auflageschicht,
- Auflegen des mindestens einen vorgebogenen Auflageblechs auf die Innenseite des vorgebogenen Trägerblechs unter Positionierung und paralleler Ausrichtung ihrer in Richtung der Biegeachse verlaufenden Längskanten zum Bilden der Trägerschicht und der mindestens einen Auflageschicht,
- stoffschlüssiges Verbinden zumindest der beiden Längskanten des mindestens einen Auflageblechs mit dem Trägerblech,
- Einformen des Verbunds aus der stoffschlüssig verbundenen Trägerschicht und mindestens einen Auflageschicht zu einem geschlitzten mehrlagigen Großrohr mittels einer Biegemaschine unter kraftschlüssiger Verbindung in nicht stoffschlüssig verbundenen Anlagebereichen,
- Schließen des verbliebenen Spalts des geschlitzten mehrlagigen Großrohres mit einer Längsnaht durch Schweißen .

Diese Maßnahmen haben wesentliche Vorteile für die Produktivität bei der Herstellung und für den Aufbau des Mehrlagenrohres. Nach der stoffschlüssigen Verbindung des vorgebogenen Trägerblechs und des mindestens einen vorgebogenen Auflageblechs, kann der Biegeprozess unter kraftschlüssiger Verbindung der Werkstofflagen ausgeführt werden, wobei problemlos verschiedene Biegemaschinen, wie Biegewalze, JCO-Biege-presse oder auch eine UOE-Presse eingesetzt werden können, die auch bei der üblichen Rohrproduktion verwendet werden.

Zu einer guten stoffschlüssigen Verbindung tragen die Maßnahmen bei, dass bei dem Verfahrensschritt des stoffschlüssigen Verbindens auch die bezüglich der Biegung umlaufenden Kanten des mindestens einen Auflageblechs zumindest abschnittsweise mit dem Trägerblech verbunden werden und/oder eine stoffschlüssige Verbindung mittels Durchschweißung des Auflageblechs erfolgt. In Untersuchungen der Erfinder hat sich gezeigt, dass die Verbindung in Umfangsrichtung, wie eine Schweiß- oder Lötverbindung, den Vorgang der kraftschlüssigen Verbindung zwischen der Trägerschicht und der mindestens einen Auflageschicht praktisch nicht beeinträchtigt.

Die stoffschlüssige Verbindung lässt sich ferner durch die Maßnahmen verbessern, dass mehrere vorgebogene Teil-Auflagebleche in Umfangsrichtung nebeneinander auf die Innenseite gelegt und dort stoffschlüssig individuell zumindest entlang ihrer beiden Längskanten mit dem Trägerblech verbunden werden.

Die weiteren Maßnahmen, dass Teil-Auflagebleche unterschiedlichen Materials, unterschiedlicher Dicke und/oder unterschiedlicher, in Umfangsrichtung verlaufender Breite verwendet werden, ergeben vorteilhafte Auslegungsmöglichkeiten des mehrlagigen Großrohres für verschiedene Anforderungen.

Die Herstellung und der Aufbau werden auch dadurch begünstigt, dass die Anfangsbiegeradien der Innenseite des Trägerbleches und der Außenseite des mindestens einen Auflagebleches gleich groß gewählt werden.

Zu einer qualitativ hochwertigen kraftschlüssigen Verbindung tragen die Maßnahmen bei, dass die Anfangsbiegeradien mindestens zweimal so groß sind wie der Radius des fertig gebogenen Großrohres ist.

Zu einer qualitativ hochwertigen Fertigung tragen die Maßnahmen bei, dass die Anfangsbiegeradien des Trägerblechs und des mindestens einen Auflageblechs so groß gewählt werden, dass ein Aufwölben oder eine Faltenbildung beim Einformen des stoffschlüssigen Verbunds aus der Trägerschicht und mindestens einen Auflageschicht zum geschlitzten Großrohr vermieden wird.

Eine hohe Stabilität des mehrlagigen Großrohres wird dadurch erreicht, dass die Anfangsbiegeradien so gewählt werden, dass eine Stauchung des mindestens einen Auflageblechs während des Einformens zum geschlitzten Großrohr bewirkt wird.

Zu einem vorteilhaften Aufbau und hoher Qualität tragen auch die Maßnahmen bei, dass mindestens ein Auflageblech mit einem Werkstoff gewählt wird, der eine höhere Streckgrenze als das Trägerblech besitzt.

Ein stabiler Aufbau des mehrlagigen Großrohres wird auch dadurch unterstützt, dass die Stauchgrenze des mindestens einen Auflageblechs beim Einformen des stoffschlüssigen Verbunds aus Trägerschicht und Auflageschicht zu dem geschlitzten Großrohr in einem vorbestimmten Ausmaß gezielt überschritten wird.

Vorteile für die Fertigung und den Aufbau des Großrohres ergeben sich ferner dadurch, dass das Schließen des nach dem Einformen in dem geschlitzten Großrohr verbliebenen Spalts in der Weise erfolgt, dass das aus der Trägerschicht gebildete Trägerrohr mittels eines Unterpulverschweißverfahrens geschweißt wird, worauf die so gebildete innere Schweißnaht mittels einer Auftragschweißung mit artgleicher oder mit einer zum Werkstoff der Auflageschicht passenden Legierung abgedeckt wird.

Die Erfindung wird nachfolgend anhand von Ausführungsbeispielen unter Bezugnahme auf die Zeichnungen näher erläutert. Es zeigen:
- Fig. 1a bis 1c: verschiedene Verfahrensschritte bei der Herstellung eines mehrlagigen Großrohres gemäß einem ersten Ausführungsbeispiel in perspektivischer Ansicht,

- Fig. 2a bis 2c: mehrere aufeinander folgende Verfahrensschritte für die Herstellung eines mehrlagigen Großrohres gemäß einem zweiten Ausführungsbeispiel und
- Fig. 3a bis 3c: mehrere Verfahrensschritte für die Herstellung eines noch weiteren Ausführungsbeispiels für die Herstellung eines mehrlagigen Großrohres.

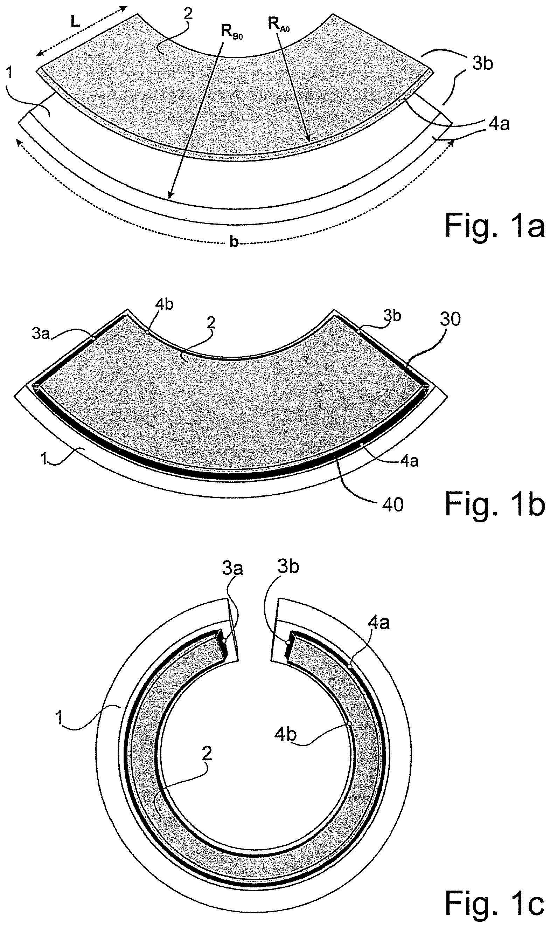

Fig. 1 zeigt in den Teilbildern a), b) und c) verschiedene Verfahrensschritte bei der Herstellung eines mehrlagigen Großrohres. Unter dem Begriff des Großrohres sollen Rohre mit Durchmessern von mindestens 200 mm und einer Gesamtwandstärke von mindestens 5 mm verstanden werden. Das mehrlagige Großrohr (Mehrlagenrohr) weist eine einen äußeren Rohrkörper bildende äußere Werkstofflage auf, die als Trägerschicht 1 (mitunter auch als Basisschicht oder Substrat bezeichnet) wirkt, sowie mindestens eine einen inneren Rohrkörper bildende innere Werkstofflage bzw. Auflageschicht 2 (mitunter auch als Liner bezeichnet) auf. Die Trägerschicht 1 erstreckt sich bei allen Ausführungsbeispielen über den gesamten Umfang des Mehrlagenrohres bis auf eine zwischen den einander zugekehrten Rändern beim fertigen Rohr ausgebildete (nicht gezeigte) Längsnaht, die vorzugsweise als Längsschweißnaht ausgeführt ist. Die Auflageschicht 2 erstreckt sich bei dem in Fig. 1 gezeigten Ausführungsbeispiel in dem fertigen Mehrlagenrohr ebenfalls bis auf eine Verbindungsnaht über den gesamten Innenumfang. Alternativ kann sie sich aber auch nur über einen Teil des Innenumfangs erstrecken.

Wie das Teilbild a) der Fig. 1 zeigt, liegen die Trägerschicht 1 und die im vorliegenden Ausführungsbeispiel nur eine Auflageschicht 2 als vorgebogenes Trägerblech bzw. vorgebogenes Auflageblech aus metallischem Werkstoff vor, wobei das vorgebogene Trägerblech bzw. die Trägerschicht 1 in dem vorgebogenen Ausgangszustand einen Anfangsbiegeradius R_{B0} und das vorgebogene Auflageblech bzw. die dadurch gebildete Auflageschicht 2 einen Anfangsradius R_{A0} aufweisen. In Umlaufrichtung erstrecken sich das Trägerblech und das Auflageblech im Wesentlichen (evtl. bis auf eine etwas geringere Ausdehnung des Auflageblechs wegen des geringeren Innenumfangs) über die gleiche Blechbreite b und in Richtung der Biegeachse bzw. Längsachse des fertigen Rohres über eine Blechlänge L. In Längsrichtung weisen das Trägerblech und das Auflageblech Längskanten 3a und 3b und in Umlaufrichtung umlaufende Kanten 4a und 4b auf. Wie das Teilbild b) der Fig. 1 zeigt, werden das Trägerblech und das Auflageblech entlang ihrer aufeinander ausgerichteten Längskanten 3a, 3b und 4a, 4b mittels einer stoffschlüssigen Verbindung 30 in Längsrichtung und bei dem gezeigten Ausführungsbeispiel auch entlang ihrer umlaufenden Kanten 4a, 4b über eine stoffschlüssige Verbindung 40 in Umlaufrichtung miteinander verbunden, wobei die stoffschlüssigen Verbindungen vorzugsweise als Schweißverbindung oder Lötverbindung ausgeführt sind. Auf diese Weise sind das die Trägerschicht 1 bildende Trägerblech und das die Auflageschicht 2 bildende Auflageblech entlang der Kanten stoffschlüssig und teilflächig im vorgebogenen Ausgangszustand miteinander verbunden und bilden einen mehrlagigen Verbund, der anschließend zu einem vollständig gebogenen Schlitzrohr eingeformt wird, wie das Teilbild c) schematisch zeigt. Beim Einformen des mehrlagigen Verbunds ergibt sich im Anschluss an den stoffschlüssigen Verbindungsprozess, der auch nur teilweise jeweils entlang der beiden Längskanten und gegebenenfalls umlaufenden Kanten ausgeführt sein kann, eine kraftschlüssige Verbindung über die restliche Fläche zwischen der Trägerschicht 1 und der Auflageschicht 2.

Das vorgebogene Trägerblech und das davon unabhängig vorgebogene Auflageblech werden im vorgebogenen Zustand bereitgestellt und z. B. schon geliefert und anschließend in der genannten Weise unter Ausrichtung ihrer Längskanten 3a, 3b und ihrer umlaufenden Kanten 4a, 4b aufeinander gelegt. Dabei sind die Anfangsbiegeradien immer größer als der Endradius des fertigen Mehrlagenrohres, jedoch jedenfalls endlich, so dass sich über die restliche Fläche beim Einformen des Verbundes zu dem Mehrlagenrohr eine kraftschlüssige Verbindung ergibt.

Vor dem Schweißen oder Löten entlang der Längskanten 3a, 3b und gegebenenfalls in Umlaufrichtung verlaufenden Kanten 4a, 4b kann eine Fixierung des die Auflageschicht 2 bildenden Auflagewerkstoffs an der Trägerschicht 1 durch Schweißheften, Löten, Kleben oder durch mechanisches Klemmen erfolgen.

Das Vorbiegen der beiden die Trägerschicht 1 und die Auflageschicht 2 bildenden Blechpartner vor deren Verbindung miteinander dient dazu, das Weiterbiegen nach der Herstellung der stoffschlüssigen Verbindung entlang der Längskanten 3a, 3b und gegebenenfalls der in Umlaufrichtung verlaufenden Kanten 4a, 4b der Auflageschicht, also in dem Verbund auf den Endradius des fertigen Mehrlagenrohres überhaupt zu ermöglichen. Der Anfangsbiegeradius der Trägerschicht 1 und der (mindestens einen) Auflageschicht 2 wird klein genug gewählt, so dass während des Weiteren bis zu dem Schlitzrohr erfolgenden Biegeprozesses der zuvor aneinander nur randseitig fest fixierten vorgebogenen Blechpartner eine Aufwölbung der in der Regel gegenüber der Trägerschicht 1 deutlich dünneren Auflageschicht 2 über der darunter liegenden Trägerschicht 1 oder eine Faltenbildung in der Auflageschicht 2 vermieden wird. Die Aufwölbung oder die Faltenbildung in der dünneren Auflageschicht 1 kann durch deren Stauchung beim gemeinsamen Biegen des Verbunds aus den zueinander nur randseitig fixierten Blechpartnern verursacht werden, weil die Stauchung zu einem Stabilitätsverlust führen kann. Die Stauchung in Umfangsrichtung des Mehrlagenrohres ist unvermeidbar und erfolgt aufgrund des kleineren Radius der Innenwand des Mehrlagenrohres im Vergleich zum Außenradius, über dem beim Biegen eine Ausdehnung stattfindet.

Das Vorbiegen des Trägerbleches und des oder der Auflagebleche kann unabhängig voneinander auch z. B. bereits beim Lieferanten geschehen. Dabei können verschiedene bekannte Biegeverfahren, wie z. B. das Dreiwalzenbiegen, eine JCO-Presse oder eine U-Presse eingesetzt werden. Bei einer bevorzugten Ausführungsform der Erfindung wird eine Walzrollvorrichtung für das Vorbiegen der (im Vergleich zu dem Trägerblech relativ) dünnen Auflagebleche eingesetzt, welche die vorgebogenen Bleche bzw. Blechstreifen aus einem Coil produziert.

Während des Einformens des aus der Trägerschicht 1 und der mindestens einen Auflageschicht 2 mit der stoffschlüssigen Verbindung entlang der Kanten hergestellten Verbunds wird die Auflageschicht 2 in tangentialer Richtung gestaucht. Die dabei entstehende tangentiale Druckspannung erzeugt eine Normalspannung, die die mindestens eine Auflageschicht 2 auf die Trägerschicht 1 presst. Auf diese Weise entsteht eine kraftschlüssige Verbindung der beiden Blechpartner zueinander zusätzlich zu der stoffschlüssigen Verbindung entlang der Kanten. Die Höhe der Anpresskraft steigt mit der Zunahme der Druckverformung, was auf die Verfestigung des Werkstoffs der Auflageschicht(en) 2 zurückzuführen ist. Der Stauchungsgrad, der am Ende des Biegens beim Einformen des Mehrlagenrohres auf Enddurchmesser erreicht wird, hängt von den Anfangsbiegeradien der Blechpartner ab. Je größer der Anfangsbiegeradius ist, desto größer ist die Druckspannung. Als Folge wird eine größere Wirksamkeit der kraftschlüssigen Verbindung zwischen der Trägerschicht 1 und der (mindestens einen) Auflageschicht 2 im fertigen Rohr erreicht.

In einer bevorzugten Ausführung der Erfindung wird der größtmögliche Anfangsbiegeradius gewählt, der noch eine sichere Biegung des Verbunds beim Einformen der beiden Blechpartner erlaubt, ohne eine Aufwölbung oder Faltenbildung der Auflageschicht 2 zu verursachen. Der so festgelegte Anfangsbiegeradius führt gleichzeitig zur maximal möglichen kraftschlüssigen Verbindung der beiden Blechpartner in dem fertigen Mehrlagenrohr. Er ist von der Dicke der die Trägerschicht 1 und mindestens eine Auflageschicht 2 bildenden Bleche, deren mechanischen Eigenschaften (wie E-Modul, Stauchfließgrenze, Verfestigung und dgl.) sowie auch von der Biegeanlage und ausgewählten Biegeprozessparametern und auch den Reibungseigenschaften der zusammenwirkenden Oberflächen der Trägerschicht 1 und der Auflageschicht 2 abhängig. Der Biegeradius kann empirisch und/oder Berechnung mittels gefundener Modellparameter ermittelt werden.

Das Einformen des Verbunds aus den beiden Blechpartnern nach der stoffschlüssigen Verbindung entlang ihrer Kanten kann mit verschiedenen geeigneten Methoden durchgeführt werden. Dazu gehören unter anderem eine Dreiwalzenbiegemaschine, JCO-Presse oder UOE-Presse, wobei der kritische Vorbiegeradius, bei dem das Einformen ohne Aufwölbung der Auflageschicht 2 möglich ist, für jede ausgewählte Methode unterschiedlich sein kann und z. B. in Vorversuchen ermittelt wird.

Ein möglichst großer Anfangsbiegeradius wird bevorzugt, der z. B. mindestens zweimal so groß ist wie der Endradius des Mehrlagenrohres und außerdem eine freie Zugänglichkeit an allen Blechkanten von oben erlaubt. Somit werden die Durchführungen von Schweißungen, Schweißnahtprüfungen und gegebenenfalls von notwendigen Reparaturen während der Herstellung erleichtert.

Nach dem Einformen des Verbunds zu dem fertig gebogenen Schlitzrohr wird der verbleibende Spalt in einer Heftmaschine geschlossen. Das so bearbeitete Mehrlagenrohr wird dann entlang seiner einander zugekehrten Längskanten weiter geschweißt, ähnlich wie es auch für metallurgisch plattierte Clad-Rohre üblich ist. Zum Schweißen des durch die Trägerschicht 1 gebildeten Trägerrohres kommt üblicherweise ein Unterpulverschweißen zum Einsatz, gefolgt von der Abdeckung der inneren Schweißnaht durch eine Auftragschweißung mit artgleicher oder mit einer zum Auflagenwerkstoff passenden Legierung.

In einer weiteren bevorzugten Ausführungsvariante der Erfindung werden das Trägerblech und das mindestens eine Auflageblech so vorgebogen, dass der Innenradius des Trägerblechs und der Außenradius des angrenzenden Auflageblechs gleich groß sind. Dies ergibt eine Minimierung des Spaltes zwischen den beiden aufeinander liegenden Blechpartnern und eine nahezu spaltenfreie Verbindung zwischen den beiden entlang der in Umlaufrichtung verlaufenden Kanten 4a, 4b des Auflageblechs vor der Einformung des aus der Trägerschicht 1 und der mindestens einen Auflageschicht 2 gebildeten Verbunds zum Endradius des Mehrlagenrohres. Dabei wird noch ein weiterer wichtiger Vorteil erreicht: der noch verbliebene Restspalt unmittelbar neben der Verbindungsnaht im Bereich der umlaufenden Kanten wird im Laufe des Einformens durch den Druck des Biegewerkzeugs geschlossen. Dies ist besonders wichtig für die Qualität der fertigen Mehrlagenrohre, bei denen der Spalt zwischen der Auflageschicht 2 und der Trägerschicht 1 auf ein Minimum reduziert werden muss.

Bei einer weiteren Ausführungsvariante der Erfindung können die den Längskanten 3a, 3b naheliegenden Bereiche des Trägerblechs bzw. der Trägerschicht 1 und dementsprechende Bereiche des Auflageblechs bzw. der Auflageschicht 2 zusätzlich auf den Endradius des Mehrlagenrohres angebogen werden, wobei die restliche Fläche des Trägerblechs und des Auflageblechs bzw. der betreffenden Schichten noch den größeren Anfangsbiegeradius aufweist. Dies kann vor dem Einformen des mit der stoffschlüssigen Verbindung hergestellten Verbunds auf den Endradius des Mehrlagenrohres geschehen. Denkbar ist auch eine Nachbiegung der Längskanten, nachdem das Mehrlagenrohr auf den Endradius überwiegend eingeformt worden ist und die Längsnahtschweißung zur Schließung des Schlitzrohres bevorsteht.

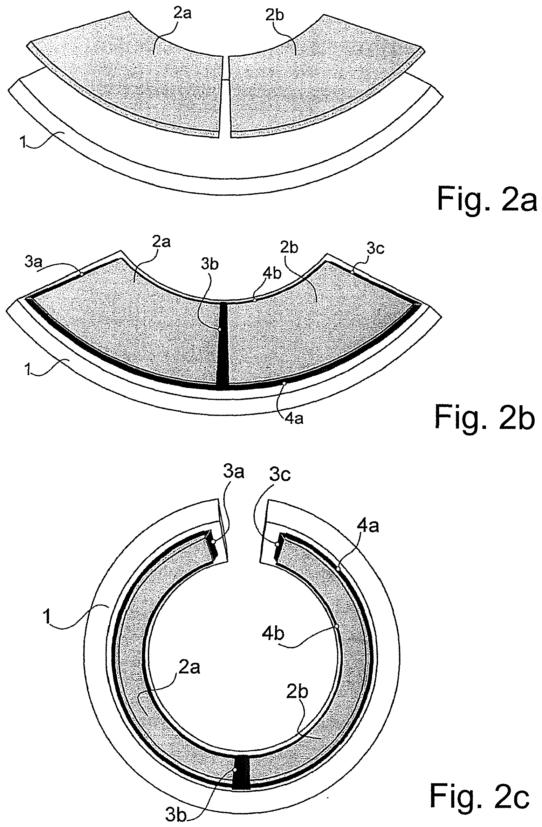

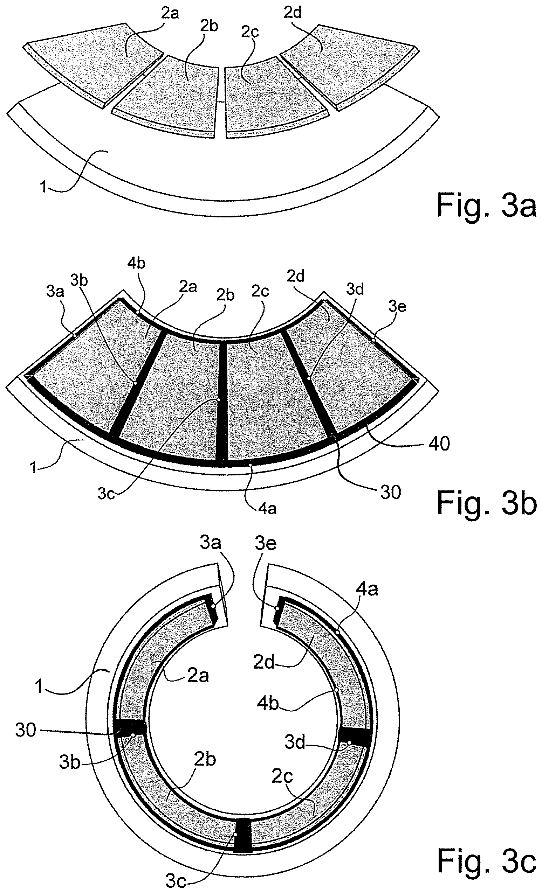

Die Anzahl der eine Auflageschicht 2 bildenden Auflagebleche in Umlaufrichtung muss nicht auf ein einziges einstückiges Auflageblech begrenzt sein, wie in Fig. 1 gezeigt, sondern kann sich aus mehreren, in Umfangsrichtung nebeneinander liegenden Teil-Auflageblechen bzw. Teil-Auflageschichten zusammensetzen, wie z. B. aus zwei (s. Fig. 2), drei oder vier (s. Fig. 3) und sogar mehr Auflageblechen, je nach Einsatzbereich und Anforderungen an die Verbindung zwischen der Auflageschicht 2 und der Trägerschicht 1. Dabei erhöht jede zusätzliche stoffschlüssige Verbindung entlang der weiteren Längskanten 3c), 3d) in Form von Verbindungsnähten die Bindung zwischen der Trägerschicht 1 und der Auflageschicht 2 im Vergleich zu einer mehr kraftschlüssigen Verbindung, die immer noch zwischen den Nähten bewirkt wird. Durch die Variation der Anzahl der Teil-Auflageschichten bzw. der Nahtzahl für die stoffschlüssige Verbindung wird eine Skalierbarkeit des gesamten Bindungskonzepts erhalten.

Die Teil-Auflageschichten können gleiche oder unterschiedliche Breiten aufweisen. Dadurch ist es möglich, auch für unterschiedliche Durchmesser des fertigen Mehrlagenrohrs zum Teil auf standardisierte Streifen gleicher oder unterschiedlicher Breite von Teil-Auflageschichten zuzugreifen.

In der Ausführungsvariante, in welcher die Auflageschicht in Umfangsrichtung aus zwei oder mehr Teil-Auflageblechen bzw. Teil-Auflageschichten zusammengesetzt ist, werden die die stoffschlüssige Verbindung bildenden Schweißnähte zwischen den Teil-Auflageblechen, die noch im vorgebogenen Zustand auf dem Trägerblech liegen, so geschweißt, geprüft und gegebenenfalls repariert und im erforderlichen Ausmaß verschliffen, dass keine weitere Schweißung nach dem Schließen des Mehrlagenrohres zu dem Schlitzrohr bzw. nach Herstellen der Längsschweißnaht im Inneren des Schlitzrohres bzw. Mehrlagenrohres mehr benötigt wird. Eine Auftragsschweißung im Bereich der Auflageschicht 2 bzw. zwischen deren Teil-Auflageschichten, die Prüfung der Auftragsschweißung und gegebenenfalls deren Reparatur werden durch einen möglichst großen Anfangsbiegeradius, der mindestens zweimal so groß wie der Endradius des Mehrlagenrohres ist und somit eine freie Zugänglichkeit der Schweißstellen erlaubt, begünstigt.

Bei einem weiteren Ausführungsbeispiel ist vorgesehen, dass zusätzliche stoffschlüssige Verbindungen zwischen der Trägerschicht 1 und der Auflageschicht 2 durch zusätzliche Schweißnähte oder Schweißpunkte, die mittels einer Durchschweißung des Auflagewerkstoffes erfolgen, geschaffen werden.

Eine weitere Ausführungsvariante der Erfindung besteht darin, dass die an die Längskanten in Umfangsrichtung anschließenden Bereiche des Trägerblechs nach dem Vorbiegen gerade bleiben; die vorgebogenen Auflagebleche werden nur bis zu dem in die Rundung übergehenden Ansatz der geraden Bereiche aufgelegt und entlang ihrer Kanten stoffschlüssig mit dem Trägerblech verbunden. Nach der Vollendung der Einformung des Verbundes zu einem Schlitzrohr werden die verbliebenen geraden Abschnitte des Trägerblechs bzw. der Trägerschicht 1 entlang der Längskante der Auflageschicht abgetrennt, so dass ein Schlitzrohr ohne gerade Abschnitte im Kantenbereich in Umfangsrichtung und dementsprechend ein rundes Mehrlagenrohr erhalten wird.

Eine weitere Ausführungsvariante besteht darin, dass die Auflagenschicht 2 die Trägerschicht 1 in Umfangsrichtung nicht vollständig abdeckt, um über einen Teilkreis eine Rinne zu bilden.

Ist die Auflageschicht 2 in Umfangsrichtung aus mehreren Teil-Auflageschichten segmentiert ausgebildet, können die Teil-Auflageschichten bzw. Segmente aus unterschiedlichen Werkstoffen hergestellt werden und/oder auch unterschiedliche Wandstärken (dicken) aufweisen. Dies ermöglicht eine anwendungsbezogene Optimierung des Mehrlagenrohrers. So können unterschiedlich beanspruchte Bereiche des Mehrlagenrohres in Bezug auf Korrosion, Verschleiß und dgl. mit jeweils dazu passenden korrosions- oder verschleißbeständigen Werkstoffen abgedeckt werden.

Das beschriebene Verfahren in seinen unterschiedlichen Varianten ermöglicht es, Werkstoffe der Auflageschicht 2 mit einer höheren Streckgrenze im Vergleich zu dem Werkstoff der Trägerschicht 1 bei der Herstellung mehrlagiger Großrohre zu verwenden. Dies bietet einen weiteren Vorteil gegenüber den in bekannter Weise hergestellten Liner-Rohren mittels Hydroformung, wenn der Liner-Werkstoff eine niedrigere Streckgrenze haben muss, damit nach der Ausdehnung des Innen- und Außenrohres und der abschließenden gemeinsamen Schrumpfung der beiden Rohre eine kraftschlüssige Verbindung entsteht.

## Patentansprüche

1. Verfahren zum Herstellen eines mehrlagigen Großrohres mit einem Durchmesser von mindestens 200 mm und einer Gesamtwandstärke von mindestens 5 mm und mit einer außen liegenden Trägerschicht (1) und mindestens einer innen liegenden Auflageschicht (2), **gekennzeichnet durch** die Folge der Verfahrensschritte
- Bereitstellen eines auf einen vorbestimmten Anfangsbiegeradius (R_{B0}) vorgebogenen Trägerblechs für die Trägerschicht (1) und mindestens eines auf einen vorbestimmten Anfangsbiegeradius (R_{A0}) vorgebogenen Auflageblechs für die Auflageschicht (2),
- Auflegen des mindestens einen vorgebogenen Auflageblechs auf die Innenseite des vorgebogenen Trägerblechs unter Positionierung und paralleler Ausrichtung ihrer in Richtung der Biegeachse verlaufenden Längskanten zum Bilden der Trägerschicht (1) und der mindestens einen Auflageschicht (2),
- stoffschlüssiges Verbinden zumindest der beiden Längskanten (3a, 3b, 3c, 3d) des mindestens einen Auflageblechs mit dem Trägerblech,
- Einformen des Verbunds aus der stoffschlüssig verbundenen Trägerschicht (1) und mindestens einen Auflageschicht (2) zu einem geschlitzten mehrlagigen Großrohr mittels einer Biegemaschine unter kraftschlüssiger Verbindung in nicht stoffschlüssig verbundenen Anlagebereichen,
- Schließen des verbliebenen Spalts des geschlitzten mehrlagigen Großrohres mit einer Längsnaht **durch** Schweißen.

2. Verfahren nach Anspruch 1,
**dadurch gekennzeichnet,**
**dass** bei dem Verfahrensschritt des stoffschlüssigen Verbindens auch die bezüglich der Biegung umlaufenden Kanten (4) des mindestens einen Auflageblechs zumindest abschnittsweise mit dem Trägerblech (1) verbunden werden und/oder eine stoffschlüssige Verbindung mittels Durchschweißung des Auflageblechs erfolgt.

3. Verfahren nach Anspruch 1 oder 2,
**dadurch gekennzeichnet,**
**dass** mehrere vorgebogene Teil-Auflagebleche in Umfangsrichtung nebeneinander auf die Innenseite gelegt und dort stoffschlüssig individuell zumindest entlang ihrer beiden Längskanten mit dem Trägerblech verbunden werden.

4. Verfahren nach Anspruch 3,
**dadurch gekennzeichnet,**
**dass** Teil-Auflagebleche unterschiedlichen Materials, unterschiedlicher Dicke und/oder unterschiedlicher, in Umfangsrichtung verlaufender Breite verwendet werden.

5. Verfahren nach einem der vorhergehenden Ansprüche,
**dadurch gekennzeichnet,**
**dass** die Anfangsbiegeradien (R_{B0}, R_{A0}) der Innenseite des Trägerbleches und der Außenseite des mindestens einen Auflagebleches gleich groß gewählt werden.

6. Verfahren nach einem der vorhergehenden Ansprüche,
**dadurch gekennzeichnet,**
**dass** die Anfangsbiegeradien (R_{B0}, R_{A0}) mindestens zweimal so groß gewählt werden wie der Radius des fertig gebogenen Großrohres.

7. Verfahren nach einem der vorhergehenden Ansprüche,
**dadurch gekennzeichnet,**
**dass** die Anfangsbiegeradien (R_{B0}, R_{A0}) des Trägerblechs und des mindestens einen Auflageblechs so groß gewählt werden, dass ein Aufwölben oder eine Faltenbildung beim Einformen des stoffschlüssigen Verbunds aus der Trägerschicht (1) und mindestens einen Auflageschicht (2) zum geschlitzten Großrohr vermieden wird.

8. Verfahren nach einem der vorhergehenden Ansprüche,
**dadurch gekennzeichnet,**
**dass** die Anfangsbiegeradien (R_{B0}, R_{A0}) so gewählt werden, dass eine Stauchung des mindestens einen Auflageblechs während des Einformens zum geschlitzten Großrohr bewirkt wird.

9. Verfahren nach einem der vorhergehenden Ansprüche,
**dadurch gekennzeichnet,**
**dass** mindestens ein Auflageblech mit einem Werkstoff gewählt wird, der eine höhere Streckgrenze als das Trägerblech besitzt.

10. Verfahren nach einem der vorhergehenden Ansprüche,
**dadurch gekennzeichnet,**
**dass** die Stauchgrenze des mindestens einen Auflageblechs beim Einformen des stoffschlüssigen Verbunds aus Trägerschicht (1) und Auflageschicht (2) zu dem geschlitzten Großrohr in einem vorbestimmten Ausmaß gezielt überschritten wird.

11. Verfahren nach einem der vorhergehenden Ansprüche,
**dadurch gekennzeichnet,**
**dass** das Schließen des nach dem Einformen in dem geschlitzten Großrohr verbliebenen Spalts in der Weise erfolgt, dass das aus der Trägerschicht (1) gebildete Trägerrohr mittels eines Unterpulverschweißverfahrens geschweißt wird, worauf die so gebildete innere Schweißnaht mittels einer Auftragschweißung mit artgleicher oder mit einer zum Werkstoff der Auflageschicht (2) passenden Legierung abgedeckt wird.

## Claims

1. A method for producing a multi-layer large pipe having a diameter of at least 200 mm and a total wall thickness of at least 5 mm and comprising an outer support layer (1) and at least one inner lining layer (2), **characterized by** the following steps:
- providing a support plate, which is pre-bent to a predetermined initial bend radius (R_{B0}), for the support layer (1) and at least one lining plate, which is pre-bent to a predetermined initial bend radius (R_{A0}), for the lining layer (2),
- laying the at least one pre-bent lining plate onto the inner face of the pre-bent support plate, with positioning and parallel alignment of the longitudinal edges thereof extending in the direction of the bending axis, in order to form the support layer (1) and the at least one lining layer (2),
- integrally joining at least the two longitudinal edges (3a, 3b, 3c, 3d) of the at least one lining plate to the support plate,
- shaping the composite of the integrally joined support layer (1) and at least one lining layer (2) into a slotted multi-layer large pipe by means of a bending machine, with frictional connection in contact areas that are not integrally joined,
- closing the remaining gap of the slotted multi-layer large pipe with a longitudinal seam by means of welding.

2. The method according to claim 1, **characterized in that**, in the step of the integral joining, the edges (4) of the at least one lining plate that extend peripherally with respect to the bending are also joined to the support plate (1) at least in some segments and/or integral joining is performed by means of through-welding of the lining plate.

3. The method according to claim 1 or 2, **characterized in that** several pre-bent partial lining plates are laid onto the inner face adjacent to each other in the peripheral direction and are individually integrally joined there to the support plate at least along the two longitudinal edges of said partial lining plates.

4. The method according to claim 3, **characterized in that** partial lining plates of different material, different thickness, and/or different width in the peripheral direction are used.

5. The method according to one of the preceding claims, **characterized in that** the initial bend radii (R_{B0}, R_{A0}) of the inner face of the support plate and of the outer face of the at least one lining plate are selected to be equal.

6. The method according to one of the preceding claims, **characterized in that** the initial bend radii (R_{B0}, R_{A0}) are selected to be at least twice as large as the radius of the fully bent large pipe.

7. The method according to one of the preceding claims, **characterized in that** the initial bend radii (R_{B0}, R_{A0}) of the support plate and of the at least one lining plate are selected to be of such magnitude that bulging or folding is avoided when the integral composite of the support layer (1) and the at least one lining layer (2) is shaped into the slotted large pipe.

8. The method according to one of the preceding claims, **characterized in that** the initial bend radii (R_{B0}, R_{A0}) are selected in such a way that the at least one lining plate is compressed during the shaping into the slotted large pipe.

9. The method according to one of the preceding claims, **characterized in that** at least one lining plate having a material that has a higher tensile yield point than the support plate is selected.

10. The method according to one of the preceding claims, **characterized in that** the compressive yield point of the at least one lining plate is deliberately exceed to a predetermined extent when the integral composite of the support layer (1) and the lining layer (2) is shaped into the slotted large pipe.

11. The method according to one of the preceding claims, **characterized in that** the gap remaining in the slotted large pipe after the shaping is closed **in that** the support pipe formed from the support layer (1) is welded by means of a submerged-arc welding method, whereupon the inner weld seam thus formed is covered with alloy of the same type or with an alloy suitable for the material of the lining layer (2) by means of overlay welding.

## Revendications

1. Procédé de fabrication d'un tube à grand diamètre multicouche avec un diamètre d'au moins 200 mm et une épaisseur de paroi totale d'au moins 5 mm et avec une couche de support (1) située à l'extérieur et au moins une couche d'appui (2) située à l'intérieur, **caractérisé par** la succession des étapes de procédé
- mise à disposition d'une tôle de support précambrée selon un rayon de courbure initial (R_{B0}) prédéfini pour la couche de support (1) et d'au moins une tôle d'appui précambrée selon un rayon de courbure initial (R_{A0}) prédéfini pour la couche d'appui (2),
- pose de l'au moins une tôle d'appui précambrée sur le côté intérieur de la tôle de support précambrée par positionnement et orientation parallèle de leurs arêtes longitudinales s'étendant en direction de l'axe de courbure pour former la couche de support (1) et l'au moins une couche d'appui (2),
- liaison par correspondance de matière d'au moins les deux arêtes longitudinales (3a, 3b, 3c, 3d) de l'au moins une tôle d'appui avec la tôle de support,
- mise en forme du composé formé de la couche de support (1) reliée par correspondance de matière et d'au moins une couche d'appui (2) pour obtenir un tube à grand diamètre multicouche fendu au moyen d'une plieuse par liaison de force dans des zones d'appui non reliées par correspondance de matière,
- fermeture de la fente restante du tube à grand diamètre multicouche fendu avec une soudure longitudinale par soudage.

2. Procédé selon la revendication 1,
**caractérisé en ce que**
dans l'étape de procédé de liaison par correspondance de matière, les arêtes (4) périphériques par rapport à la courbure de l'au moins une tôle d'appui sont également reliées au moins par section à la tôle de support (1) et/ou une liaison par correspondance de matière a lieu par pénétration de soudure de la tôle d'appui.

3. Procédé selon la revendication 1 ou 2,
**caractérisé en ce que**
plusieurs tôles d'appui partielles précambrées sont posées l'une à côté de l'autre dans le sens périphérique sur le côté intérieur et y sont reliées individuellement par correspondance de matière au moins le long de leurs deux arêtes longitudinales avec la tôle de support.

4. Procédé selon la revendication 3,
**caractérisé en ce que**
des tôles d'appui partielles de différent matériau, de différente épaisseur et/ou de différente largeur s'étendant dans le sens périphérique sont utilisées.

5. Procédé selon l'une quelconque des revendications précédentes,
**caractérisé en ce que**
les rayons de courbure initiaux (R_{B0}, R_{A0}) du côté intérieur de la tôle de support et du côté extérieur de l'au moins une tôle d'appui sont choisis de même taille.

6. Procédé selon l'une quelconque des revendications précédentes,
**caractérisé en ce que**
les rayons de courbure initiaux (R_{B0}, R_{A0}) sont choisis au moins deux fois aussi grands que le rayon du tube à grand diamètre complètement cambré.

7. Procédé selon l'une quelconque des revendications précédentes,
**caractérisé en ce que**
les rayons de courbure initiaux (R_{B0}, R_{A0}) de la tôle de support et de l'au moins une tôle d'appui sont choisis de telle taille qu'un bombement ou une formation de plis est évité lors de la mise en forme du composé par correspondance de matière formé de la couche de support (1) et d'au moins une couche d'appui (2) en tube à grand diamètre fendu.

8. Procédé selon l'une quelconque des revendications précédentes,
**caractérisé en ce que**
les rayons de courbure initiaux (R_{B0}, R_{A0}) sont choisis de façon à ce qu'un refoulement de l'au moins une tôle d'appui est évité pendant la mise en forme en tube à grand diamètre fendu.

9. Procédé selon l'une quelconque des revendications précédentes,
**caractérisé en ce qu'**
au moins une tôle d'appui est choisie avec un matériau, qui dispose d'une limite d'élasticité supérieure à celle de la tôle de support.

10. Procédé selon l'une quelconque des revendications précédentes,
**caractérisé en ce que**
la limite de refoulement de l'au moins une tôle d'appui est dépassée de manière ciblée dans une mesure prédéterminée lors de la mise en forme du composé par correspondance de matière formé d'une couche de support (1) et d'une couche d'appui (2) en tube à grand diamètre fendu.

11. Procédé selon l'une quelconque des revendications précédentes,
**caractérisé en ce que**
la fermeture de la fente restant dans le tube à grand diamètre fendu après la mise en forme se fait de telle manière que le tube de support formé de la couche de support (1) est soudé au moyen d'un procédé de soudage à l'arc sous flux en poudre, ce après quoi le cordon de soudure intérieur ainsi formé est recouvert au moyen d'un rechargement avec un alliage de même nature ou adapté au matériau de la couche d'appui (2).
